# EUROPEAN PATENT APPLICATION

(11) **EP 2 325 787 A1**
(43) Date of publication of application: **25.05.2011**
(21) Application number: 09175254.3
(22) Date of filing: 06.11.2009
(51) Int. Cl.: G06Q 10/00

(54) **Method and system for initiating a courier transport**

(71) Applicant: Deutsche Post AG, 53113 Bonn (DE)
(72) Inventor: Apthorp, Adrian, RH7 6BH, Lingfield, Surrey (GB)
(74) Representative: Jostarndt, Hans-Dieter

(57) **Abstract**

It is disclosed a method for initiating a courier transport with an electronic calendar information, **characterized in that** comprising the steps, receiving a first electronic calendar information initiated from a customer device in a dispatch logic device a request for a courier transport service for delivery and/or pickup of physical objects, calculating a time schedule with time slots for at least one available courier selected of a group of couriers considering workload, route planning, traffic conditions, and available resources in the dispatch logic device, sending a second electronic calendar information comprising at least one available courier transport option at scheduled times and/or a parcel compartment system as deposition option to the customer device, and receiving a third electronic calendar information from the customer device in the dispatch logic device and assigning a courier out of the group of couriers and/or the parcel compartment system according the option selected from the second electronic calendar information.

## Description

The present invention discloses a method for initiating a courier transport with an electronic calendar information. Same day courier services deliver in less than 24 hours and are an integral part of any modern economy. Courier services are distinguished from ordinary mail services by features such as speed, security, tracking, conformation of reception with signature, specialisation and individualisation of services, and committed delivery times, which are optional for most everyday mail services. Due to premium service offer, courier services are usually more expensive than usual mail services, and their use is typically restricted to packages where one or more of these features are considered important enough to warrant the cost.

Courier services are specialised in delivering mail pieces of high priority, importance or sensitivity in a local area. Typically, courier mail pieces are of time and temperature critical goods, such as organs for transplant, key equipment or parts that are necessary for day to day operations. While most companies use courier services certain industries depend on couriers on a daily basis. For example, biomedical laboratories need samples for testing and evaluation, manufacturing industry require parts to keep their plants operating smoothly, financial institutions transfer multiple documents every day between branches and processing centres, law firms must deliver confidential signatured documents on very strict deadlines for court filings and pharmaceutical distributors use couriers to transport medications to hospitals and nursing homes.

Computer systems for organising logistic processes and the exchange of data with major customers are known. The data format of proprietary systems of logistic companies does not allow to use standard devices. In general the customer has to provide hardware, server space at the customer side. Further the logistic system software needs maintenance in form of regular updates. If a major customer uses services of several logistic companies the expenses for above mentioned hardware multiplies with each logistic service, the staff of the customer has to get extra training for application of several mailing tools, which is ineffective and costly. Smaller business customers normally do not have an access to the proprietary systems of a logistic company and thus use services based on the telephone, or need to install a proprietary software to be downloaded on customer's workstation and to be connected to the internet. Also this results in maintenance cost of the workstation and training for the customer's staff. Also for the logistic companies the maintenance of the proprietary system rise high cost and to implement changes in the running system are risky and require high efforts for providing the necessary reliability of the system.

When a customer of a logistic service company offering a courier service wishes to send such courier mail pieces, she/he orders a pickup of the mail object at a distinctive customer pickup and/or delivery location, e.g. an office or a hospital. This is normally made in a telephone call to a booking centre, or via said software module with installed proprietary software of the logistic company or an internet website of the booking centre of the logistic company. For further processing on the proprietary booking system of the logistic company the pickup order is translated into a booking command. The pickup request is registered in the booking system and forwarded via a dispatch system and relayed to a courier. The courier is assigned to the customers pickup and/or delivery order via a proprietary handheld device or the courier is handed out a printed out paper sheet with the pickup and/or delivery details and routing details.

Dispatching the couriers in a flexible way means to provide a very efficient routing and a number of couriers for dispatching at peak times or in areas wherein many flexible pickup and/or delivery jobs have to be provided. For handling the logistical problem in an economic way, logistic companies normally offer courier pickup and/or delivery service within different time slot durations to the customer depending on the urgency of the delivery. The smaller the time slots, the more complicated the task is for dispatching the resources, a courier or a group of couriers.

It is the object of the present invention to provide a flexible and efficient time scheduling for pickup and/or delivery of physical objects.

The object is achieved by a method according to claim 1, a dispatch logic device according to claim 9, and a dispatch system according to claim 10. Embodiments of the method, the dispatch logic device, and the dispatch system are given in the dependent claims.

The embodiments of the present invention provide a method and a dispatch system with a dispatch logic device adapted for initiating a courier transport with an electronic calendar information, comprising the steps:
- receiving a first electronic calendar information initiated from a customer device in a dispatch logic device a request for a courier transport service for delivery and/or pickup of physical objects,
- calculating a time schedule with time slots for at least one available courier selected of a group of couriers considering workload, route planning, traffic conditions, and available resources in the dispatch logic device,
- sending a second electronic calendar information comprising at least one available courier transport option at scheduled times and/or a parcel compartment system as deposition option to the customer device, and
- receiving a third electronic calendar information from the customer device in the dispatch logic device and assigning a courier out of the group of couriers and/or the parcel compartment system according the option selected from the second electronic calendar information.

In an alternative embodiment the present invention provides a dispatch logic device providing a first module for receiving a first electronic calendar information directed to a group of couriers initiated from a customer device comprising a first electronic calendar information as a request for a courier transport service for delivery and/or pickup of physical objects, providing a processor for calculating a time schedule with time slots for at least one available courier selected of a group of couriers considering workload, route planning, traffic conditions, and available resources, providing the first module for sending a second electronic calendar information comprising at least an information about an available courier transport at a scheduled time and/or an information about a parcel compartment system to the customer device, and providing the first module for receiving a third electronic calendar information from the customer device in the dispatch logic device and assigning a courier out of the group of couriers and/or the parcel compartment system according the third electronic calendar information.

The idea of the present invention is to provide an effective and flexible method for allowing pickup and/or delivery of physical mail object by using an open communication standard, direct interaction with the customer and the couriers by means of the customer device and the dispatch logic device, and the courier device, respectively. The present invention allows the customer to use the iCalendar standard customer device to more accurately determine and select the time slot when the courier is ought to visit the customer for a pickup and/or delivery job, which is appreciated if the customer only has limited time. Advantageously, the time slots may be very short and the appointments can be very precise according to the present invention, because the courier needs less redundancy or buffering in time planning since he knows from the feedback of the customer about the availability of the customer, that the pickup requests on his route planning are most likely to be fulfilled without time waste.

Advantageously the present invention allows to use different route planning algorithms to be contemplated in reference to the timing schedule of the time slot, the time slot duration, priority of pickup and/or delivery or other criteria. The offer of several time slots for a pickup and/or delivery appointment to the customer allows the customer to select one of a choice of possibilities. This allows a more effective planning for both, the customer as well as the dispatcher or a dispatch logistic device in the logistic company managing a group of couriers.

In an advantageous implementation the first electronic calendar information is generated on a website comprising at least an information about location of pickup and the assigned group of couriers. Instead of a website several other techniques may come in the mind of the person of skill in the art, e.g. an email, a short message or a multi media message on a mobile telephone, etc. The request of the customer is automatically preselected to a suitable group of couriers. The automatic preselection of the request reduces the workload for the dispatching logic device and allows the dispatch logic device to work more efficiently.

In further an advantageous implementation the dispatch logic device calculates the different time slot length according to the priority of pickup service and presents a choice of time slots in at least one second electronic calendar information for presentation on the customer device. This advantageously allows to implement different strategies of time scheduling to be presented to the customer, e.g. in the case a courier is in a predetermined range of the customer, but due to heavy traffic the resulting arrival time is only roughly known, an early but wide time slot might be offered, in case due to low traffic conditions the arrival time is exactly known, but it takes the courier some hours to arrive, a late but exact appointed time might be provided.

In an advantageous implementation the dispatch logic device calculates and presents additionally to the courier service at least one suitable parcel compartment system in at least one second electronic calendar information for presentation on the customer device. In case the customer needs a fixed time slot, depositing the physical object at a parcel compartment system advantageously allows the customer a collection of the objects at an exactly scheduled time, and allows flexibility to the courier route planning.

In further an advantageous implementation the first electronic calendar information directed to a group of couriers is intercepted by the dispatch logic device to which the group of couriers is assigned as workflow manager. The customer does not need to know the address of the dispatch logic device, but only the relevant group of couriers in a predetermined range of the pickup and/or delivery location. The adjoining of the dispatch logic device in the processing of the customer's order allows balancing the workload within the group of couriers and allows several pickup and/or delivery strategies to fulfil the customer's needs.

In an advantageous implementation the dispatch logic device calculates the courier time slot choice considering all couriers that are in a predetermined range at the requested pickup time. Advantageously, the considering of a plurality of couriers allows to form and present several strategies for pickup and/or delivery to the customers. The interchange of electronic calendar data according to iCalendar standard format allows to present all suitable information for the pickup and/or delivery in the customer's electronic calendar which is a suitable way for the customer for make an effective selection of the best possible pickup and/or delivery time slot.

In an advantageous implementation the dispatch logic device calculates the courier time slot choice considering additional couriers for the requested pickup time. A number of couriers might be not actively in duty but might form a reserve for on demand pickup in peak times. According to the present invention, on demand couriers might advantageously be effectively recruited by alarming a courier on a personal mobile communication device, i.e. a mobile phone and by using iCalendar format for interchanging an electronic calendar information with the pickup and/or delivery data to the courier at the time of alarming.

In further an advantageous implementation the dispatch logic device calculates the courier time slot choice considering forwarding to the group of couriers and choices the courier accepting the job as the first for the requested pickup time.

In an advantageous implementation the dispatch logic device transmits an assignment to the courier in connection for a time slot determined by the customer device according the third electronic calendar information.

The aforementioned and other aspects of the invention will also be apparent from and elucidated with reference to the embodiments described hereinafter making reference to the drawings.

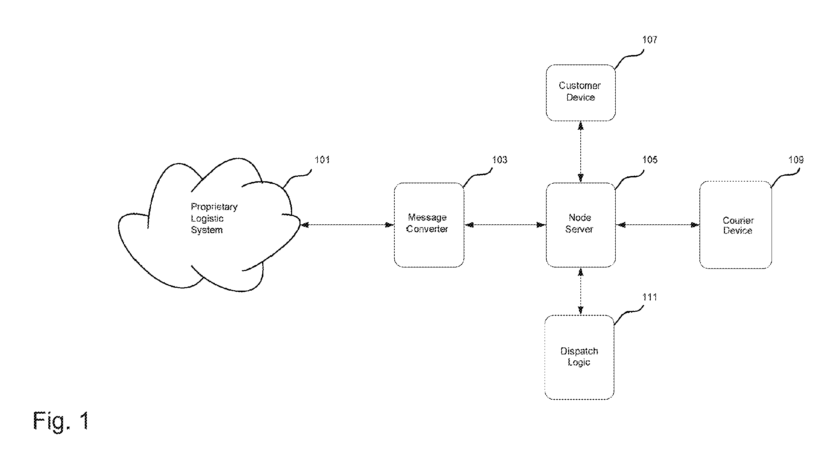

Reference will be made by way of example to the accompanying drawings in which Fig. 1 shows an illustration of the implementation of the present invention, and

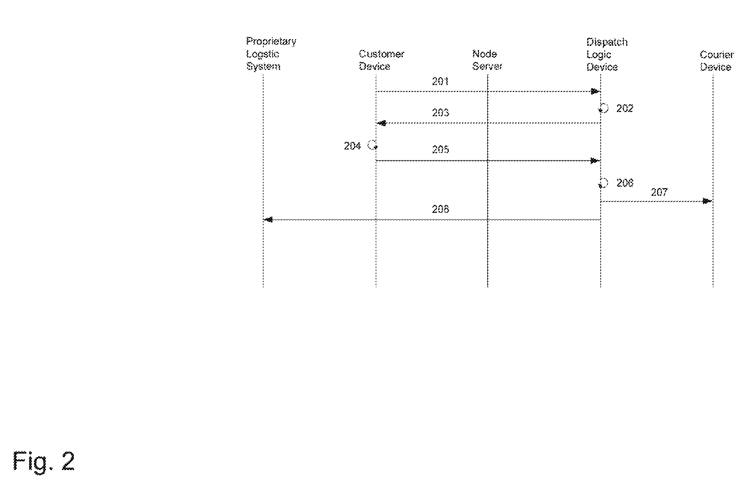

Fig. 2 shows a schematic flow chart of the implementation of the present invention.

The present invention allows using an open standard for all applications of courier service workflow, allowing the customer to use all features and additional features of the logistic service provider on customer's hardware and software devices independently of the platform of operation system and resulting in a high flexibility for the both, the customer as well as the logistic company.

Nowadays calendar invitations are being exchanged over computer networks and the internet for inviting other persons to meetings, appointments or telephone calls, etc. An exchange of calendar object is normally established by filling out a form in a graphical user interface of a time planner or calendaring tool. When the calendar object has been generated, other persons can be requested to join in the event or task, by exchanging the data in an adapted data format with all concerning properties via email. The person concerned may accept the appointment and confirm or reject the appointment, and send the changed property data back to the sender. The properties which are provided in an open calendar object exchange and processing standard are defined in the iCalendar standard. Although the iCalendar standard might be know, the implementation of iCalendar objects for an effective courier workflow in a standard conform way provides problems. According to the present invention a calendar object may be a calendar event or a calendar task.

In general the iCalendar standard provides the ability to communicate with the customer using the electronic calendar invitations to rearrange a pickup and/or delivery of physical mail objects in an inventive manner.

The present invention concerns formats for exchanging and storing of calendar events, in particular concerning the following standards of the Internet Engineering Task Force (IETF) in form of Request for Comments (RFC):
• RFC 2445 - Internet Calendaring and Scheduling Core Object Specification (iCalendar)
• RFC 2446 - iCalendar Transport-Independent Interoperability Protocol (ITIP)
• RFC 2247 - Message-Based Interoperability Protocol (iMIP) - e-mail based calendaring
• RFC 4791 - CalDav - http based calendaring
• Internet draft - CalDAV Scheduling Extensions to WebDAV (CalDav-Sched)

The iCalendar standard regulates the data format for the exchange of meetings times, to-do entries, and other data among compliant applications. iCalendar data is typically exchanged using traditional email programs; some standards e.g. iCalendar and iTIP are designed to be independent of the particular transport protocol.

The iCalendar format is a data format defined by Request for Comments (RFC) 2445 of the Internet Engineering Task Force (IETF). An also known standard, which is compatible to the iCalendar Standard is the vCalendar standard, which is a preceding standard that was promulgated by the Internet Mail Consortium (IMC).

The customer device 107 according to the present invention is either a software for communication with the iCalendar standard or hardware device i.e. a computer or a mobile communication device, for example, a mobile telephone, a PDA or any device that is possibly used for complications especially with a computer network and/or the Internet.

The system according to the present invention comprises a node server 105, and several devices 103, 107, 109, 111. The node server 105 and devices 103, 107, 109, 111 interchange data in the iCalendar format. The plurality of devices comprise particularly at least one customer device 107, a dispatch logic device 111, a courier device 109, and a message converter 103 as an interface to the proprietary logistic system 111. The data format between the message converter 103 and the proprietary logistic system 111 may be different from the iCalendar standard.

Any message interchanged in iCalendar format comprises a plurality of properties, it is not necessary to interchange the entire set of properties every time, sufficiently the actual changed properties need to be exchanged.

A standard message is an iCalendar Event Reply/Request as per RFC 2446. The iCalendar Event Reply/Request comprise standard properties which are interpreted in the devices in the sense of logistic workflow, e.g. the data property LOCATION may comprise information about the receiver address, the ATTACH property may obtain information about mail object type and priority. A property introduced with an "x" is a standard conform way of extending the iCalendar data format for special purposes. The x-format properties in the present invention comprise information which is specially adjusted for logistic purposes, e.g. the property X-DHL-COMMENT may concern delivery information at the receivers location.

The dispatch logic device 111 is an appliance that calculates the routing of the couriers transport routes and acts as an autonomous calendar user device interacting with the node server 105 using the standard protocols.

Further a dispatcher operating the dispatch logic device 111 may be necessary to manage the allocation of a particular courier or a particular pickup and/or delivery job. The dispatcher handles the task allocation in particular if the dispatch logic device 111 can not allocate a job to a courier.

For initiation of a pickup and/or delivery the customer invites a courier of the logistic company. For making an appointment for a delivery and/or pickup of a physical object, the customer uses a customer device 107 for first query of the availability of a courier out of a group of couriers in form of sending an first electronic calendar information 201.

The customer device 107 conveys a first electronic calendar information 201 to a previously known address of a group of couriers of the logistic company. In particular the previously known address may be an address which is obtained by form a publication on a website of the logistic company. Therefore the website may in particular provide a search tool or a menu for selection of a group of couriers e.g. Couriers CZ, Couriers DE, Couriers London, Couriers Global or for selection of a specific area, within a given geography, e.g. United Kingdom, Germany, Belgium, London, Prague, etc. In particular the address for the first electronic calendar information 201 might also be given to the customer device 107 by a message for mobile communication devices, e.g. a mobile phone on request by the customer. Several possibilities like text messages, short messages, multimedia messages or Internet-based mobile services are further suitable alternatives. Further a group of couriers may be automatically allocated to the customer on the website based on a preregistration of the customer's data and address details or ZIP/postcode.

With the first electronic calendar information 201 the customer requests a query for the availability of free capacities of a courier in the certain area. Optionally further some information of the physical object, e.g. the size and weight, might also be provided by the customer.

The first electronic calendar information 201 sent out by the customer device 107 in iCalendar format. In particular the first electronic calendar information 201 provides an availability message to a previously provided address of the group of couriers.

The incoming first electronic calendar information 201 is intercepted by the dispatch logic device 111 assigned to the selected group of couriers and manages the workflow of the group of couriers. The dispatch logic device 111 applies criteria and processes for determining the route and resources for courier transport workflow planning which are known in the art, e.g. the dispatch logic device 111 calculates which courier is available according to the route planning, and identifies time slots for couriers to serve the pickup and/or delivery.

In one embodiment the dispatch logic device 111 implements for matching the route planning of the couriers on duty a route planning algorithm, e.g. the dispatch logic device 111 might consider all the couriers that are on a route within in the predetermined range of e.g. 1 kilometre at the scheduled time.

In another embodiment the dispatch logic device 111 implements a resource allocation algorithm to be contemplated, e.g. if a customer requires an out of hours collection adhoc couriers reserved for special purposes could perform the service, or e.g. to forward the request to multiple couriers that are out of service at a predetermined time and the first one to accept gets the pickup and/or delivery job. A plurality of strategies may be implemented. Further the method according to the present invention allows that time slot may to be reserved ahead of a final booking and may beforehand be integrated into the route planning of a group of couriers.

The dispatch logic device 111 is applying a server and a computer programme product for calculation of a suitable courier and according scheduling courier pickup and/or delivery time slots. The dispatch logic device 111 processes the data in step 202 the calculation results in several possibilities, in different time slots. Available time slots are then returned in a second electronic calendar information 203 in form of a service availability response to the customer's calendaring device.

Alternatively the second electronic calendar information 203 may comprise locations of parcel compartment systems in a predetermined range of the customer which are suitable for the pickup and/or a delivery service. Information about the pickup and/or delivery location is offered to the customer by displaying the information in form of a calendar invitation in a calendar tool on the customer device 107. The event may be displayed by a tool in an iCalendar compatible format on a mobile communication device, a PC with standard office software or any other iCalendar compatible device or on a website. Preferably the second electronic calendar information 203 is then displayed providing the possibility to accept, postpone or deny the invitation. The customer processes in step 204 acknowledges one of the electronic calendar invitations displaying time slots and/or locations on the customer device 107 and selects a favourite pickup and/or delivery e.g. as a favourite time slot or a favourite parcel compartment system. The customer device 107 is used to reply the at least one selection in form of a third electronic calendar information 205 to the dispatch logic device 111.

The selection is send back to the dispatch logic device 111 in form of a third electronic calendar information 205 and processed in the dispatch logic device 111. Then in step 206 the dispatch logic device 111 calculates a new routing and selects the courier who is concerned with the pickup and/or delivery service in the time slot selected by the customer as favourite pickup and/or delivery time slot. The dispatch logic device 111 assigns the courier by sending a fourth electronic calendar information 207 to the courier device 109 providing the new route planning to the selected courier for presentation on the courier device 109. The courier device 109 displays of the change of route planning and new pick-up and/or delivery service in an electronic calendar object.

In case the customer selects a pickup and/or delivery at a parcel compartment system, the dispatch logic device 111 is on one hand providing an information to a courier device 109 in order to instruct a courier with a fourth electronic calendar information 207 in form of an iCalendar object to fetch a physical object at the selected parcel compartment system. On the other hand a fifth electronic calendar information 208 is send to a proprietary logistic system, e.g. the booking system in order to reserve capacities at the selected parcel compartment system, which may also be e.g. a drop point or a branch office.

In another embodiment different express products across the company's portfolio of services may be added as proposal for alternative delivery and/or pickup service to the customer.

The present invention may also be used for other scheduling purposes, e.g. scheduling a route planning for public transport purposes or of scheduling a work planning of a group of maintenance workers.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims.

**List of reference numerals:**
- 101: Proprietary Logistic System
- 103: Message Converter
- 105: Node Server
- 107: Customer Device
- 109: Courier Device
- 111: Dispatch Logic Device
- 201: First electronic calendar information
- 202: Processing first calendar information
- 203: Second electronic calendar information
- 204: Processing second electronic calendar information
- 205: Third electronic calendar information
- 206: Processing third electronic calendar information
- 207: Fourth electronic calendar information to courier
- 208: Fifth electronic calendar information to parcel compartment system

## Claims

1. Method for initiating a courier transport with an electronic calendar information, comprising the steps:
- receiving a first electronic calendar information (201) initiated from a customer device (107) in a dispatch logic device (111) a request for a courier transport service for delivery and/or pickup of physical objects,
- calculating (202) a time schedule with time slots for at least one available courier selected of a group of couriers considering workload, route planning, traffic conditions, and available resources in the dispatch logic device (111),
- sending a second electronic calendar information (203) comprising at least one available courier transport option at scheduled times to the customer device (107), and
- receiving a third electronic calendar information (205) from the customer device (107) in the dispatch logic device (111) and assigning a courier out of the group of couriers and/or the parcel compartment system according the option selected from the second electronic calendar information (205).

2. Method according to any of the proceeding claims, wherein the first electronic calendar information (201) is generated on a website comprising at least an information about location of pickup and the assigned group of couriers.

3. Method according to any of the proceeding claims, wherein the dispatch logic calculates the different time slot length according to the priority of pickup service and presents a choice of time slots in at least one second electronic calendar information (203) for presentation on the customer device (107).

4. Method according to any of the proceeding claims, wherein the dispatch logic device (111) calculates and presents additionally to the courier service at least one suitable parcel compartment system in at least one second electronic calendar information (203) for presentation on the customer device (107).

5. Method according to any of the proceeding claims, wherein the first electronic calendar information (201) directed to a group of couriers is intercepted by the dispatch logic device (111) to which the group of couriers is assigned as workflow manager.

6. Method according to any of the proceeding claims, wherein the dispatch logic device (111) calculates the courier time slot choice considering all couriers that are in a predetermined range at the requested pickup time.

7. Method according to any of the proceeding claims, wherein the dispatch logic device (111) calculates the courier time slot choice considering additional reserve couriers for the requested pickup time.

8. Method according to any of the proceeding claims, wherein the dispatch logic device (111) calculates the courier time slot choice considering forwarding to the group of couriers and choices the courier accepting the job as the first for the requested pickup time.

9. Method according to any of the proceeding claims, wherein the dispatch logic device (111) transmits an assignment (207) to the courier device (109) in connection for a time slot determined by the customer device (107) according the third electronic calendar information (205).

10. Dispatch logic device (111) providing a first module for receiving a first electronic calendar information (201) directed to a group of couriers initiated from a customer device (107) comprising a first electronic calendar information (201) as a request for a courier transport service for delivery and/or pickup of physical objects, providing a processor for calculating a time schedule with time slots for at least one available courier selected of a group of couriers considering workload, route planning, traffic conditions, and available resources, providing the first module for sending a second electronic calendar information (203) comprising at least an information about an available courier transport at a scheduled time to the customer device (107), and providing the first module for receiving a third electronic calendar information (205) from the customer device (107) in the dispatch logic device (111) and assigning a courier out of the group of couriers and/or the parcel compartment system according the third electronic calendar information (205).

11. Dispatch system for initiating a courier transport with an electronic calendar information (201, 205, 207), wherein a dispatch logic device (111) is adapted for:
- receiving a first electronic calendar information (201) initiated from a customer device (107) in a dispatch logic device (111) a request for a courier transport service for delivery and/or pickup of physical objects,
- calculating (202) a time schedule with time slots for at least one available courier selected of a group of couriers considering workload, route planning, traffic conditions, and available resources in the dispatch logic device (111),
- sending a second electronic calendar information (203) comprising at least one available courier transport option at scheduled times and/or a parcel compartment system as deposition option to the customer device (107), and
- receiving a third electronic calendar information (205) from the customer device (107) in the dispatch logic device (111) and assigning a courier out of the group of couriers and/or the parcel compartment system according the option selected from the second electronic calendar information (205).
